(19) Europäisches Patentamt
European Patent Office
Office européen des brevets

(11) **EP 3 222 602 B1**

(12) **EUROPEAN PATENT SPECIFICATION**

(45) Date of publication and mention
of the grant of the patent:
**12.08.2020 Bulletin 2020/33**

(51) Int Cl.:
*C04B 41/89* (2006.01)   *C04B 41/00* (2006.01)
*C04B 41/45* (2006.01)   *C04B 41/52* (2006.01)
*C03C 8/08* (2006.01)   *C03C 8/14* (2006.01)
*C03C 3/17* (2006.01)   *C03C 3/19* (2006.01)
*C03C 8/16* (2006.01)   *C03C 8/24* (2006.01)
*C04B 41/50* (2006.01)   *C04B 41/85* (2006.01)
*C03C 3/16* (2006.01)   *C04B 111/00* (2006.01)

(21) Application number: **17159538.2**

(22) Date of filing: **07.03.2017**

(54) **HIGH TEMPERATURE OXIDATION PROTECTION FOR COMPOSITES**

HOCHTEMPERATUROXIDATIONSSCHUTZ FÜR VERBUNDSTOFFE

PROTECTION CONTRE L'OXYDATION À HAUTE TEMPÉRATURE POUR DES COMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.03.2016 US 201615076348**

(43) Date of publication of application:
**27.09.2017 Bulletin 2017/39**

(73) Proprietor: **Goodrich Corporation
Charlotte, NC 28217-4578 (US)**

(72) Inventor: **MAZANY, Anthony
Amelia Island, FL Florida 32034 (US)**

(74) Representative: **Dehns
St. Bride's House
10 Salisbury Square
London EC4Y 8JD (GB)**

(56) References cited:
**EP-A2- 2 767 529       JP-A- 2006 036 551
US-A1- 2007 154 712**

• **D. D. L. CHUNG: "Acid aluminum phosphate for
the binding and coating of materials", JOURNAL
OF MATERIALS SCIENCE, vol. 38, no. 13, 2003,
pages 2785-2791, XP055393633, Dordrecht ISSN:
0022-2461, DOI: 10.1023/A:1024446014334**

## Description

### FIELD

The present disclosure relates generally to carbon-carbon composites and, more specifically, to oxidation protection systems for carbon-carbon composite structures.

### BACKGROUND

Oxidation protection systems for carbon-carbon composites are typically designed to minimize loss of carbon material due to oxidation at operating conditions, which include temperatures as high as 900°C (1652°F). Phosphate-based oxidation protection systems may reduce infiltration of oxygen and oxidation catalysts into the composite structure. However, despite the use of such oxidation protection systems, significant oxidation of the carbon-carbon composites may still occur during operation of components such as, for example, aircraft braking systems. Both patent documents JP2006-36551A and EP2767529A2 disclose methods for protecting carbon containing materials against oxidation.

### SUMMARY

A method for coating a carbon-carbon composite structure is provided comprising forming a first slurry by combining a glass frit comprising a first phosphate glass composition with a first carrier fluid comprising an acid aluminum phosphate, wherein the ratio of aluminum to phosphoric acid is between 1:2 and 1:3 by weight , applying the first slurry on a surface of the composite structure to form a base layer, and heating the composite structure to a temperature sufficient to adhere the base layer to the composite structure.

The method further comprises forming a second slurry by combining a second glass frit comprising a second phosphate glass composition with a second carrier fluid, applying the second slurry to the base layer to form a sealing layer, and heating the composite structure to a temperature sufficient to adhere the sealing layer to the base layer. In various embodiments, the method further comprises applying at least one of a pretreating composition or a barrier coating to the composite structure prior to applying the first slurry to the composite structure. In various embodiments, the method further comprises applying a pretreating composition, wherein the pretreating composition comprises at least one of a phosphoric acid or an acid phosphate salt, an aluminum salt, and an additional salt, and wherein the composite structure is porous and the pretreating composition penetrates at least one pore of the composite structure. In various embodiments, the method further comprises applying a pretreating composition, wherein the applying comprises, applying a first pretreating composition to an outer surface of the composite structure, the first pretreating composition comprising aluminum oxide and water, heating the pretreating composition, applying a second pretreating composition comprising at least one of a phosphoric acid or an acid phosphate salt, and an aluminum salt on the first pretreating composition, wherein the composite structure is porous and the second pretreating composition penetrates at least a pore of the composite structure. In various embodiments, the barrier coating comprises at least one of a carbide, a nitride, a boron nitride, a silicon carbide, a titanium carbide, a boron carbide, a silicon oxycarbide, a molybdenum disulfide, a tungsten disulfide, or a silicon nitride. In various embodiments, the method further comprises applying a barrier coating by at least one of reacting the composite structure with molten silicon, spraying, chemical vapor deposition (CVD), molten application, or brushing.

The first phosphate glass composition of the base layer comprises between 15 weight percent and 30 weight percent of boron nitride. In various embodiments, the first phosphate glass composition is represented by the formula $a(A'_2O)_x(P_2O_5)_{y1}b(G_fO)_{y2}c(A''O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to about 5;
b is a number in the range from 0 to about 10;
c is a number in the range from 0 to about 30;
x is a number in the range from about 0.050 to about 0.500;
$y_1$ is a number in the range from about 0.100 to about 0.950;
$y_2$ is a number in the range from 0 to about 0.20; and
z is a number in the range from about 0.01 to about 0.5;

$$(x + y_1 + y_2 + z)=1;$$

and

$$x < (y_1 + y_2).$$

In various embodiments, the second phosphate glass composition is represented by the formula $a(A'_{2O})_x(P_2O_5)_{y1}b(G_fO)_{y2}c(A"O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to about 5;
b is a number in the range from 0 to about 10;
c is a number in the range from 0 to about 30;
x is a number in the range from about 0.050 to about 0.500;
$y_1$ is a number in the range from about 0.100 to about 0.950;
$y_2$ is a number in the range from 0 to about 0.20; and
z is a number in the range from about 0.01 to about 0.5;

$$(x + y_1 + y_2 + z)=1;$$

and

$$x < (y_1 + y_2).$$

In various embodiments, the first slurry comprises a refractory compound such as a nitride, a boron nitride, a silicon carbide, a titanium carbide, a boron carbide, a silicon oxycarbide, silicon nitride, molybdenum disulfide or tungsten disulfide. In various embodiments, the composite structure is a carbon-carbon composite structure. In various embodiments, at least one of the first carrier fluid or the second carrier fluid comprises water. In various embodiments, at least one of the first slurry or the second slurry comprises at least one of a surfactant, a flow modifier, a polymer, ammonium hydroxide, ammonium dihydrogen phosphate, acid aluminum phosphate, nanoplatelets, or graphene nanoplatelets.

An article is provided comprising a carbon-carbon composite structure, an oxidation protection composition including a base layer disposed on an outer surface of the carbon-carbon composite structure and a sealing layer disposed on an outer surface of the base layer, wherein the base layer comprises a first phosphate glass composition having an acid aluminum phosphate, wherein the ratio of aluminum to phosphoric acid is between 1:2 and 1:3 by , wherein the sealing layer comprises a second phosphate glass. The sealing layer may also be referred to as a coating. In various embodiments, the first phosphate glass composition of the base layer comprises *h*-boron nitride and the ratio of aluminum to phosphoric acid is 1 to 2.5. In various embodiments, the second phosphate glass composition comprises acid aluminum phosphate.

The first phosphate glass composition of the base layer comprises between 15 weight percent and 30 weight percent of boron nitride.

In various embodiments, the first phosphate glass composition is represented by the formula $a(A'_{2O})_x(P_2O_5)_{y1}b(G_fO)_{y2}c(A"O)_z$:

A' is selected from: lithium, sodium, potassium, rubidium, cesium, and mixtures thereof;

$G_f$ is selected from: boron, silicon, sulfur, germanium, arsenic, antimony, and mixtures thereof;

A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to about 5;

b is a number in the range from 0 to about 10;

c is a number in the range from 0 to about 30;

x is a number in the range from about 0.050 to about 0.500;

$y_1$ is a number in the range from about 0.100 to about 0.950;

$y_2$ is a number in the range from 0 to about 0.20; and

z is a number in the range from about 0.01 to about 0.5;

$$(x + y_1 + y_2 + z) = 1;$$

and

$$x < (y_1 + y_2).$$

In various embodiments, the second phosphate glass composition is represented by the formula $a(A'_2O)_x(P_2O_5)_{y1}b(G_fO)_{y2}c(A"O)_z$:

A' is selected from: lithium, sodium, potassium, rubidium, cesium, and mixtures thereof;

Gf is selected from: boron, silicon, sulfur, germanium, arsenic, antimony, and mixtures thereof;

A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to about 5;

b is a number in the range from 0 to about 10;

c is a number in the range from 0 to about 30;

x is a number in the range from about 0.050 to about 0.500;

$y_1$ is a number in the range from about 0.100 to about 0.950;

$y_2$ is a number in the range from 0 to about 0.20; and

z is a number in the range from about 0.01 to about 0.5;

$$(x + y_1 + y_2 + z) = 1;$$

and

$$x < (y_1 + y_2).$$

In various embodiments, the carbon-carbon composite structure comprises a barrier coating. In various embodiments, the carbon-carbon composite structure comprises a pretreatment composition.

## BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1A illustrates a cross sectional view of an aircraft wheel braking assembly, in accordance with various embodiments;

FIG. 1B illustrates a partial side view of an aircraft wheel braking assembly, in accordance with various embodiments;

FIGs. 2A, 2B, and 2C illustrate a method for coating a composite structure in accordance with various embodiments;

FIG. 3 illustrates experimental data obtained from testing various glass compositions in accordance with various embodiments;

FIG. 4 illustrates further experimental data obtained from testing various glass compositions in accordance with various embodiments at 760°C (1400°F); and

FIG. 5 illustrates further experimental data obtained from testing various oxidation protection slurries in accordance with various embodiments at 760°C (1400°F).

## DETAILED DESCRIPTION

The detailed description of embodiments herein makes reference to the accompanying drawings, which show embodiments by way of illustration.

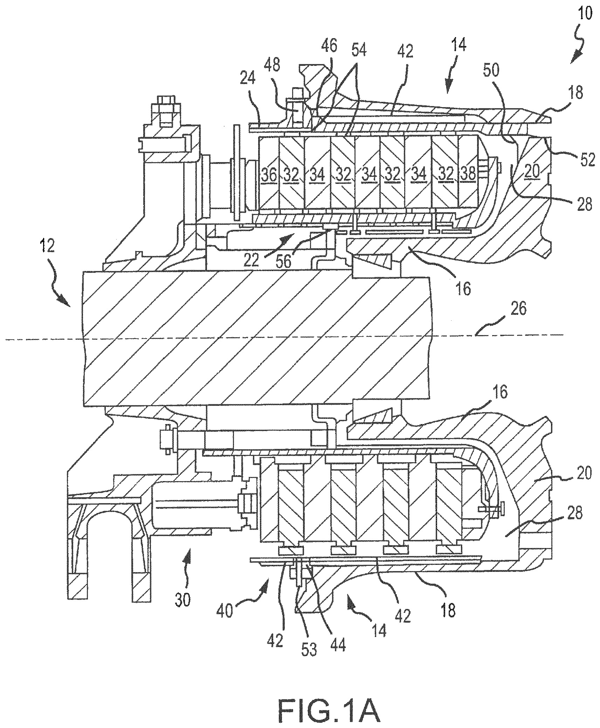

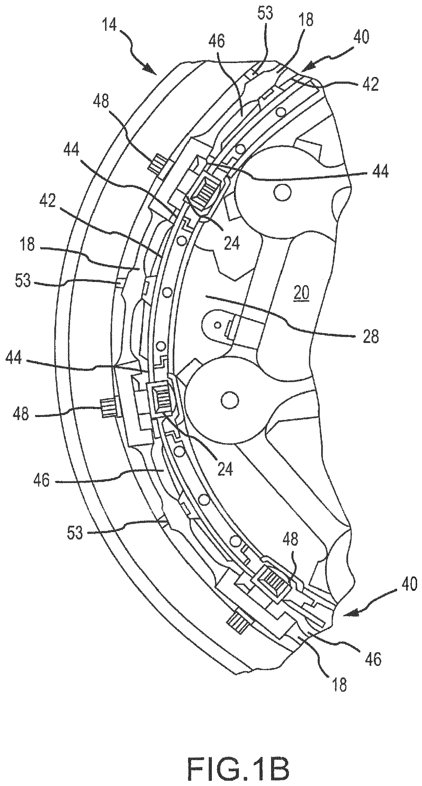

With initial reference to FIG. 1A and 1B, aircraft wheel braking assembly 10 such as may be found on an aircraft, in accordance with various embodiments is illustrated. Aircraft wheel braking assembly may, for example, comprise a bogie axle 12, a wheel 14 including a hub 16 and a wheel well 18, a web 20, a torque take-out assembly 22, one or more torque bars 24, a wheel rotational axis 26, a wheel well recess 28, an actuator 30, multiple brake rotors 32, multiple brake stators 34, a pressure plate 36, an end plate 38, a heat shield 40, multiple heat shield sections 42, multiple heat shield carriers 44, an air gap 46, multiple torque bar bolts 48, a torque bar pin 50, a wheel web hole 52, multiple heat shield fasteners 53, multiple rotor lugs 54, and multiple stator slots 56. FIG. 1B illustrates a portion of aircraft wheel braking assembly 10 as viewed into wheel well 18 and wheel well recess 28.

In various embodiments, the various components of aircraft wheel braking assembly 10 may be subjected to the application of compositions and methods for protecting the components from oxidation.

Brake disks (e.g., interleaved rotors 32 and stators 34) are disposed in wheel well recess 28 of wheel well 18. Rotors 32 are secured to torque bars 24 for rotation with wheel 14, while stators 34 are engaged with torque take-out assembly 22. At least one actuator 30 is operable to compress interleaved rotors 32 and stators 34 for stopping the aircraft. In this example, actuator 30 is shown as a hydraulically actuated piston, but many types of actuators are suitable, such as an electromechanical actuator. Pressure plate 36 and end plate 38 are disposed at opposite ends of the interleaved rotors 32 and stators 34. Rotors 32 and stators 34 can comprise any material suitable for friction disks, including ceramics or carbon materials, such as a carbon/carbon composite.

Through compression of interleaved rotors 32 and stators 34 between pressure plates 36 and end plate 38, the resulting frictional contact slows rotation of wheel 14. Torque take-out assembly 22 is secured to a stationary portion of the landing gear truck such as a bogie beam or other landing gear strut, such that torque take-out assembly 22 and stators 34 are prevented from rotating during braking of the aircraft.

Carbon-carbon composites (also referred to herein as composite structures, composite substrates, and carbon-carbon composite structures, interchangeably) in the friction disks may operate as a heat sink to absorb large amounts of kinetic energy converted to heat during slowing of the aircraft. Heat shield 40 may reflect thermal energy away from wheel well 18 and back toward rotors 32 and stators 34. With reference to FIG. 1A, a portion of wheel well 18 and torque bar 24 is removed to better illustrate heat shield 40 and heat shield segments 42. With reference to FIG. 1B, heat shield 40 is attached to wheel 14 and is concentric with wheel well 18. Individual heat shield sections 42 may be secured in place between wheel well 18 and rotors 32 by respective heat shield carriers 44 fixed to wheel well 18. Air gap 46 is defined annularly between heat shield segments 42 and wheel well 18.

Torque bars 24 and heat shield carriers 44 can be secured to wheel 14 using bolts or other fasteners. Torque bar bolts 48 can extend through a hole formed in a flange or other mounting surface on wheel 14. Each torque bar 24 can optionally include at least one torque bar pin 50 at an end opposite torque bar bolts 48, such that torque bar pin 50 can be received through wheel web hole 52 in web 20. Heat shield sections 42 and respective heat shield carriers 44 can then be fastened to wheel well 18 by heat shield fasteners 53.

Under the operating conditions (e.g., high temperature) of aircraft wheel braking assembly 10, carbon-carbon composites may be prone to material loss from oxidation of the carbon. For example, various carbon-carbon composite components of aircraft wheel braking assembly 10 may experience both catalytic oxidation and inherent thermal oxidation caused by heating the composite during operation. In various embodiments, composite rotors 32 and stators 34 may be heated to sufficiently high temperatures that may oxidize the carbon surfaces exposed to air. At elevated temperatures, infiltration of air and contaminants may cause internal oxidation and weakening, especially in and around brake rotor lugs 54 or stator slots 56 securing the friction disks to the respective torque bar 24 and torque take-out assembly 22.

Because carbon-carbon composite components of aircraft wheel braking assembly 10 may retain heat for a substantial time period after slowing the aircraft, oxygen from the ambient atmosphere may react with the carbon matrix and/or carbon fibers to accelerate material loss. Further, damage to brake components may be caused by the oxidation enlargement of cracks around fibers or enlargement of cracks in a reaction-formed porous barrier coating (e.g., a silicon-based barrier coating) applied to the carbon-carbon composite.

Elements identified in severely oxidized regions of carbon-carbon composite brake components include potassium (K) and sodium (Na). These alkali contaminants may come into contact with aircraft brakes as part of cleaning or de-icing materials. Other sources include salt deposits left from seawater or sea spray. These and other contaminants (e.g. Ca, Fe, etc.) can penetrate and leave deposits in pores of carbon-carbon composite aircraft brakes, including the substrate and any reaction-formed porous barrier coating. When such contamination occurs, the rate of carbon loss by oxidation can be increased by one to two orders of magnitude.

In various embodiments, components of aircraft wheel braking assembly 10 may reach operating temperatures in the range from about 100° C up to about 900° C. However, it will be recognized that the oxidation protection compositions and methods of the present disclosure may be readily adapted to many parts in this and other braking assemblies, as well as to other carbon-carbon composite structures susceptible to oxidation losses from infiltration of atmospheric oxygen and/or catalytic contaminants.

In various embodiments, a method for limiting an oxidation reaction in a composite structure may comprise forming a slurry comprising a first phosphate glass composition in the form of a glass frit, powder, or other suitable pulverized form in a first carrier fluid (such as, for example, water), applying the slurry to a composite structure, and heating the composite structure to a temperature sufficient to drive the carrier fluid and form an oxidation protection coating on the composite structure, which in various embodiments may be referred to a base layer. The slurry may comprise additives, such as, for example, ammonium hydroxide, ammonium dihydrogen phosphate, nanoplatelets (such as graphene-based nanoplatelets), among others, to improve hydrolytic stability and/or to increase the composite structure's resistance to oxidation, thereby tending to reduce mass loss of composite structure. In various embodiments, a slurry comprising acid aluminum phosphates having an aluminum (Al) to phosphoric acid ($H_3PO_4$) ratio of 1 to 3 or less by weight, such as an $Al:H_3PO_4$ ratio of between 1 to 2 and 1 to 3 by weight, tends to provide increased hydrolytic stability without substantially increasing composite structure mass loss. In various embodiments, a slurry comprising acid aluminum phosphates having an $Al:H_3PO_4$ ratio between 1:2 to 1:3 produces an increase in hydrolytic protection and an unexpected reduction in composite structure mass loss.

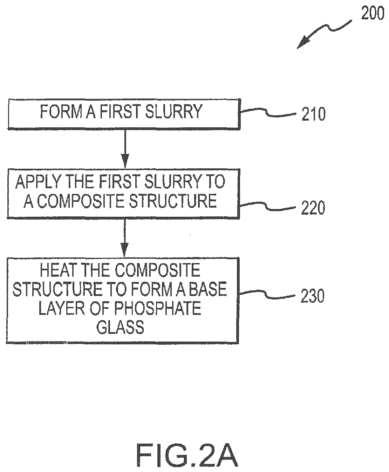

With initial reference to FIG. 2A, a method 200 for coating a composite structure in accordance with various embodiments is illustrated. Method 200 may, for example, comprise applying an oxidation inhibiting composition to non-wearing surfaces of carbon-carbon composite brake components. In various embodiments, method 200 may be used on the back face of pressure plate 36 and/or end plate 38, an inner diameter (ID) surface of stators 34 including slots 56, as well as outer diameter (OD) surfaces of rotors 32 including lugs 54. The oxidation inhibiting composition of method 200 may be applied to preselected regions of a carbon-carbon composite structure that may be otherwise susceptible to oxidation. For example, aircraft brake disks may have the oxidation inhibiting composition applied on or proximate stator slots 56 and/or rotor lugs 54.

In various embodiments, method 200 may comprise forming a first slurry 210 by combining a first phosphate glass composition in the form of a glass frit, powder, or other suitable pulverized and/or ground form with a first carrier fluid (such as, for example, water). In various embodiments, the first slurry may comprise an acid aluminum phosphate wherein the ratio of $Al:H_3PO_4$ may be between 1:2 to 1:3, between 1:2.2 to 1:3, between 1:2.5 to 1:3, between 1:2.7 to 1:3 or between 1:29 to 1:3, as measured by weight. The first phosphate glass composition may further comprise a boron nitride additive. For example, a boron nitride (such as hexagonal boron nitride) may be added to the first phosphate glass composition such that the resulting composition comprises between about 10 weight percent and about 30 weight percent of boron nitride, wherein the term "about" in this context only means +/- 2% weight percent. Further, the composition may comprise between about 15 weight percent and 25 weight percent of boron nitride, wherein the term "about" in this context only means +/- 2% weight percent. Boron nitride may be prepared for addition to the first phosphate glass composition by, for example, ultrasonically exfoliating boron nitride in dimethylformamide (DMF), a solution of DMF and water, or 2-propanol solution. In various embodiments, the boron nitride additive may comprise a boron nitride that has been prepared for addition to the first phosphate glass composition by crushing or milling (e.g., ball milling) the boron nitride. The resulting boron nitride may be combined with the first phosphate glass composition glass frit.

The first phosphate glass composition may comprise one or more alkali metal glass modifiers, one or more glass network modifiers and/or one or more additional glass formers. In various embodiments, boron oxide or a precursor may optionally be combined with the $P_2O_5$ mixture to form a borophosphate glass, which has improved self-healing properties at the operating temperatures typically seen in aircraft braking assemblies. In various embodiments, the phosphate glass and/or borophosphate glass may be characterized by the absence of an oxide of silicon. Further, the ratio of $P_2O_5$ to metal oxide in the fused glass may be in the range from about 0.25 to about 5 by weight.

Potential alkali metal glass modifiers may be selected from oxides of lithium, sodium, potassium, rubidium, cesium, and mixtures thereof. In various embodiments, the glass modifier may be an oxide of lithium, sodium, potassium, or mixtures thereof. These or other glass modifiers may function as fluxing agents. Additional glass formers can include oxides of boron, silicon, sulfur, germanium, arsenic, antimony, and mixtures thereof.

Suitable glass network modifiers include oxides of vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof.

The first phosphate glass composition may be prepared by combining the above ingredients and heating them to a fusion temperature. In various embodiments, depending on the particular combination of elements, the fusion temperature may be in the range from about 700° C (1292° F) to about 1500° C (2732° F). The resultant melt may then be cooled and pulverized and/or ground to form a glass frit or powder. In various embodiments, the first phosphate glass composition may be annealed to a rigid, friable state prior to being pulverized. Glass transition temperature ($T_g$), glass softening temperature ($T_s$) and glass melting temperature ($T_m$) may be increased by increasing refinement time and/or temperature. Before fusion, the first phosphate glass composition comprises from about 20 mol % to about 80 mol % of $P_2O_5$. In various embodiments, the first phosphate glass composition comprises from about 30 mol % to about 70 mol % $P_2O_5$, or precursor thereof. In various embodiments, the first phosphate glass composition comprises from about 40 to about 60 mol % of $P_2O_5$.

The first phosphate glass composition may comprise from about 5 mol % to about 50 mol % of the alkali metal oxide. In various embodiments, the first phosphate glass composition comprises from about 10 mol % to about 40 mol % of the alkali metal oxide. Further, the first phosphate glass composition comprises from about 15 to about 30 mol % of the alkali metal oxide or one or more precursors thereof. In various embodiments, the first phosphate glass composition may comprise from about 0.5 mol % to about 50 mol % of one or more of the above-indicated glass formers. The first phosphate glass composition may comprise about 5 to about 20 mol % by weight of one or more of the above-indicated glass formers. As used herein, mol % is defined as the number of moles of a constituent per the total moles of the solution.

In various embodiments, the first phosphate glass composition can comprise from about 0.5 mol % to about 40 mol % of one or more of the above-indicated glass network modifiers. The first phosphate glass composition may comprise from about 2.0 mol % to about 25 mol % of one or more of the above-indicated glass network modifiers.

In various embodiments, the first phosphate glass composition may represented by the formula:

$$a(A'_2O)_x(P_2O_5)_{y1}b(G_fO)_{y2}c(A''O)_z, \qquad [1]$$

In Formula 1, A' is selected from: lithium, sodium, potassium, rubidium, cesium, and mixtures thereof; $G_f$ is selected from: boron, silicon, sulfur, germanium, arsenic, antimony, and mixtures thereof; A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof; a is a number in the range from 1 to about 5; b is a number in the range from 0 to about 10; c is a number in the range from 0 to about 30; x is a number in the range from about 0.050 to about 0.500; $y_1$ is a number in the range from about 0.100 to about 0.950; $y_2$ is a number in the range from 0 to about 0.20; and z is a number in the range from about 0.01 to about 0.5; $(x + y_1 + y_2 + z)=1$; and $x < (y_1 + y_2)$. The first phosphate glass composition may be formulated to balance the reactivity, durability and flow of the resulting glass barrier layer for optimal performance.

In various embodiments, first phosphate glass composition in glass frit form may be combined with additional components. For example, crushed first phosphate glass composition in glass frit form may be combined with ammonium hydroxide, ammonium dihydrogen phosphate, nanoplatelets (such as graphene-based nanoplatelets), among others. For example, graphene nanoplatelets could be added to the first phosphate glass composition in glass frit form. In various embodiments, the additional components may be combined and preprocessed before combining them with first phosphate glass composition in glass frit form. Other suitable additional components include, for example, surfactants such as, for example, an ethoxylated low-foam wetting agent and flow modifiers, such as, for example, polyvinyl alcohol, polyacrylate, or similar polymers. In various embodiments, other suitable additional components may include additives to enhance impact resistance and/or to toughen the barrier coating, such as, for example, at least one of whiskers, nanofibers or nanotubes consisting of nitrides, carbides, carbon, graphite, quartz, silicates, aluminosilicates, phosphates, and the like. In various embodiments, additives to enhance impact resistance and/or to toughen the barrier coating may include silicon carbide whiskers, carbon nanofibers, boron nitride nanotubes and similar materials known to those skilled in the art.

In various embodiments, method 200 further comprises applying the first slurry to a composite structure 220. Applying the first slurry may comprise, for example, spraying or brushing the first slurry of the first phosphate glass composition on to an outer surface of the composite structure. Any suitable manner of applying the base layer to the composite structure is within the scope of the present disclosure. As referenced herein, the composite structure may refer to a carbon-carbon composite structure.

In various embodiments, method 200 further comprises a step 230 of heating the composite structure to form a base layer of phosphate glass. The composite structure may be heated (e.g., dried or baked) at a temperature in the range from about 200° C (292° F) to about 1000° C (1832° F). In various embodiments, the composite structure is heated to a temperature in a range from about 600° C (1112° F) to about 1000° C (1832° F), or between about 200° C (292° F) to about 900° C (1652° F), or further, between about 400° C (752° F) to about 850° C (1562° F). Step 230 may, for example, comprise heating the composite structure for a period between about 0.5 hour and about 8 hours, wherein the term "about" in this context only means +/- 0.25 hours. The base layer may also be referred to as a coating.

In various embodiments, the composite structure may be heated to a first, lower temperature (for example, about 30° C (86° F) to about 400° C (752° F)) to bake or dry the base layer at a controlled depth. A second, higher temperature (for example, about 300° C (572° F) to about 1000° C (1832° F)) may then be used to form a deposit from the base layer within the pores of the composite structure. The duration of each heating step can be determined as a fraction of the overall heating time and can range from about 10% to about 50%, wherein the term "about" in this context only means +/- 5%. In various embodiments, the duration of the lower temperature heating step(s) can range from about 20% to about 40% of the overall heating time, wherein the term "about" in this context only means +/- 5%. The lower temperature step(s) may occupy a larger fraction of the overall heating time, for example, to provide relatively slow heating up to and through the first lower temperature. The exact heating profile will depend on a combination of the first temperature and desired depth of the drying portion.

Step 230 may be performed in an inert environment, such as under a blanket of inert gas or less reactive gas (e.g., nitrogen, argon, other noble gases and the like). For example, a composite structure may be pretreated or warmed prior to application of the base layer to aid in the penetration of the base layer. Step 230 may be for a period of about 2 hours at a temperature of about 600°C (1112° F) to about 800°C (1472° F), wherein the term "about" in this context only means +/- 10°C. The composite structure and base layer may then be dried or baked in a non-oxidizing, inert or less reactive atmosphere, e.g., noble gasses and/or nitrogen ($N_2$), to optimize the retention of the first phosphate glass composition of the base layer in the pores of the composite structure. This retention may, for example, be improved by heating the composite structure to about 200°C (392° F) and maintaining the temperature for about 1 hour before heating the carbon-carbon composite to a temperature in the range described above. The temperature rise may be controlled at a rate that removes water without boiling, and provides temperature uniformity throughout the composite structure.

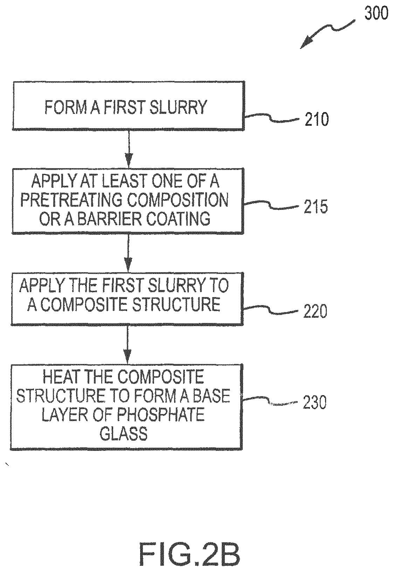

In various embodiments and with reference now to FIG. 2B, method 300, which comprises steps also found in method 200, may further comprise applying at least one of a pretreating composition or a barrier coating 215 prior to applying the first slurry. Pretreatment step 215 may, for example, comprise applying a first pretreating composition to an outer surface of a composite structure, such as a component of aircraft wheel braking assembly 10. In various embodiments, the first pretreating composition comprises an aluminum oxide in water. For example, the aluminum oxide may comprise an additive, such as a nanoparticle dispersion of aluminum oxide (for example, NanoBYK-3600® , sold by BYK Additives & Instruments). The first pretreating composition may further comprise a surfactant or a wetting agent. The composite structure may be porous, allowing the pretreating composition to penetrate at least a portion of the pores of the composite structure.

In various embodiments, after applying the first pretreating composition, the component is heated to remove water and fix the aluminum oxide in place. For example, the component may be heated between about 100°C (212°F) and 200°C, and further, between 100°C (212°F) and 150 °C (392°F).

Pretreatment step 215 may further comprise applying a second pretreating composition. In various embodiments, the second pretreating composition comprises a phosphoric acid and an aluminum phosphate, aluminum hydroxide, or aluminum oxide. The second pretreating composition may further comprise, for example, a second metal salt such as a magnesium salt. In various embodiments, the aluminum to phosphorus ratio of the aluminum phosphate is 1 to 3 or less by weight. Further, the second pretreating composition may also comprise a surfactant or a wetting agent. In various embodiments, the second pretreating composition is applied to the composite structure atop the first pretreating composition. The composite structure may then, for example, be heated. In various embodiments, the composite structure may be heated between about 600 °C (1112 °F) and about 800 °C (1472 °F), and further, between about 650 °C (1202 °F) and 750 °C (1382 °F).

Pretreatment step 215 may further comprise applying a barrier coating to an outer surface of a composite structure, such as a component of aircraft wheel braking assembly 10. In various embodiments the barrier coating composition may comprise carbides or nitrides, including at least one of a boron nitride, silicon carbide, titanium carbide, boron carbide, silicon oxycarbide, and silicon nitride. In various embodiments, the barrier coating may be formed by treating the composite structure with molten silicon. The molten silicon is reactive and may form a silicon carbide barrier on the composite structure. Step 215 may comprise, for example, application of the barrier coating by spraying, chemical vapor deposition (CVD), molten application, or brushing the barrier coating composition on to the outer surface of the carbon-carbon composite structure. Any suitable manner of applying the base layer to composite structure is within the scope of the present disclosure.

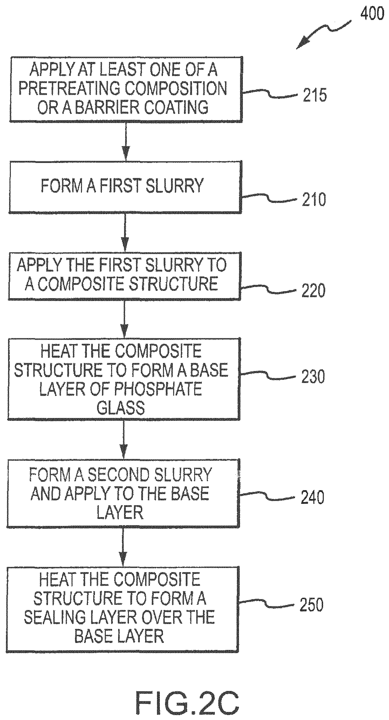

In various embodiments and with reference now to FIG. 2C, method 400 may further comprise a step 240, similar to step 210, of forming a second slurry by combining a second phosphate glass composition in glass frit or powder form with a second carrier fluid (such as, for example, water). In various embodiments, the second slurry may comprise an acid aluminum phosphate wherein the ratio of aluminum (Al) to phosphoric acid ($H_3PO_4$) may be between 1:2 to 1:3, between 1:2.2 to 1:3, between 1:2.5 to 1:3, between 1:2.7 to 1:3 or between 1:29 to 1:3. Further, step 240 may comprise spraying or brushing the second slurry of the second phosphate glass composition on to an outer surface of the base layer. Any suitable manner of applying the sealing layer to the base layer is within the scope of the present disclosure.

In various embodiments, the second phosphate glass composition is substantially free of boron nitride. In this case, "substantially free" means less than 0.01 percent by weight. For example, the second phosphate glass composition may comprise any of the glass compositions described in connection with the first phosphate glass composition, without the addition of a boron nitride additive. In various embodiments, the second phosphate glass composition may comprise the same phosphate glass composition used to prepare the first phosphate glass composition. In various embodiments, the second phosphate glass composition comprises a different phosphate glass composition than the first phosphate glass composition.

Method 200 may further comprise a step 250 of heating the composite structure to form a sealing layer of phosphate glass over the base layer. Similar to step 230, the composite structure may be heated at a temperature sufficient to adhere the sealing layer to the base layer by, for example, drying or baking the carbon-carbon composite structure at a temperature in the range from about 200°C (392° F) to about 1000°C (1832° F). In various embodiments, the composite structure is heated to a temperature in a range from about 600° C (1112° F) to about 1000°C (1832°F), or between about 200°C (392°F) to about 900°C (1652° F), or further, between about 400°C (752°F) to about 850° C (1562°F), wherein in this context only, the term "about" means +/- 10° C. Further, step 250 may, for example, comprise heating the composite structure for a period between about 0.5 hour and about 8 hours, where the term "about" in this context only means +/- 0.25 hours.

In various embodiments, step 250 may comprise heating the composite structure to a first, lower temperature (for example, about 30°C (86°F) to about 300°C (572°F)) followed by heating at a second, higher temperature (for example, about 300°C (572°F) to about 1000°C (1832°F)). Further, step 250 may be performed in an inert environment, such as under a blanket of inert or less reactive gas (e.g., nitrogen, argon, other noble gases, and the like).

TABLE 1 illustrates a variety of phosphate glass compositions in accordance with various embodiments.

TABLE 1

|  | Phosphate Glass Composition | | | | | |
|---|---|---|---|---|---|---|
|  | A | B | C | D | E | F |
| Wt % Glass | 75.01 | 75.01 | 76.71 | 69.74 | 80.20 | 73.22 |
| Wt % Boron Nitride | 0 | 0 | 21.07 | 28.09 | 17.53 | 24.54 |
| Wt % o-AlPO4 | 0 | 2.27 | 0 | 0 | 0 | 0 |

Phosphate glass compositions A and B comprise boron nitride-free phosphate glasses. For example, glasses A and B may be suitable sealing layers, such as the sealing layer applied in step 240 of method 400. Phosphate glass compositions C through F comprise boron nitride-containing phosphate glass. For example, glass compositions C through F may illustrate suitable base layers, such as base layers applied in step 220 of methods 200, 300, and 400. As illustrated, the boron nitride content of glass compositions C through F varies between about 17.53 and 28.09 weight percent boron nitride. However, any suitable boron nitride-containing phosphate glass (as described above) is in accordance with the present disclosure.

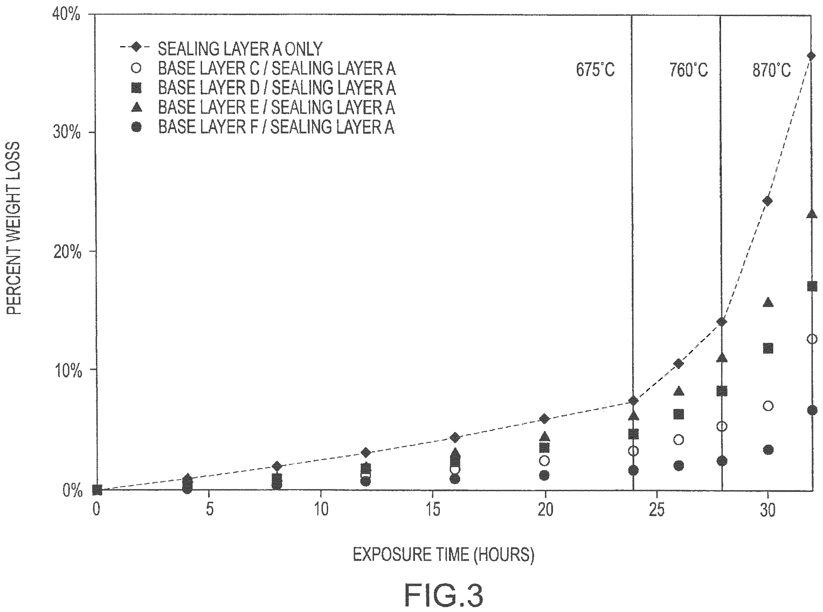

With reference to FIG. 3 and TABLE 2 (below), experimental data obtained from testing various glass compositions in accordance with various embodiments is illustrated.

TABLE 2

| Base Layer | (none) | E | D | C | F |
|---|---|---|---|---|---|
| Sealing Layer | A | A | A | A | A |

(continued)

| Oxidation Temp | Exposure Time (Hours) | Percentage Weight Loss | | | | |
|---|---|---|---|---|---|---|
| 675 Degrees C | 0 | 0.00 | 0.00 | 0.00 | 0.00 | 0.00 |
| | 4 | 0.90 | 0.32 | 0.41 | 0.44 | 0.18 |
| | 8 | 1.98 | 0.70 | 1.01 | 1.07 | 0.39 |
| | 12 | 3.13 | 1.19 | 1.76 | 1.95 | 0.64 |
| | 16 | 4.41 | 1.80 | 2.56 | 2.98 | 0.95 |
| | 20 | 5.94 | 2.52 | 3.56 | 4.65 | 1.31 |
| | 24 | 7.48 | 3.41 | 4.73 | 6.29 | 1.76 |
| 760 Degrees C | 26 | 10.63 | 4.31 | 6.43 | 8.47 | 2.11 |
| | 28 | 14.28 | 5.40 | 8.37 | 11.13 | 2.54 |
| 870 Degrees C | 30 | 24.43 | 7.18 | 11.96 | 15.95 | 3.50 |
| | 32 | 36.45 | 12.76 | 17.27 | 23.43 | 6.89 |

The base layer and sealing layers are shown in TABLE 2 are the same as shown in TABLE 1, with like labeling A through F. As illustrated in TABLE 2, a base layer of phosphate glass formed of boron nitride-comprising glass compositions B through E are applied as slurry (i.e. a first slurry of a first phosphate glass composition) to a composite structure. A sealing layer formed of glass composition A is applied over the base layer (i.e. a second slurry of a second phosphate glass composition). As shown, the composite structure having the base layer exhibited a lower weight loss to oxidation at temperatures at and above 675° C (1250° F) than composite structures having layer A by itself. FIG. 3 illustrates the data from TABLE 2, with percent weight loss on the y axis and exposure time on the x axis.

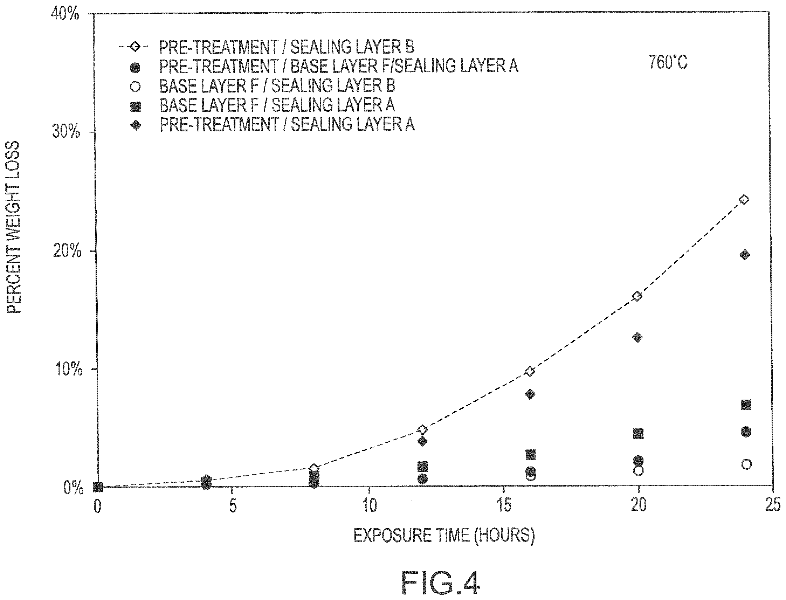

With reference to FIG. 4, a number of combinations are illustrated, including various combinations of pre-treatment (such as, for example, as may be performed by pretreatment step 215), base layers, and sealing layers. The base layer and sealing layers are shown in FIG. 1 with the same labeling as shown in TABLE 1, A through F. For example, FIG. 4 illustrates that the performance of a composition comprising a base layer of glass composition F and a sealing layer B provides improved oxidation protection over a pretreated composite structure having only sealing layer B. Other combinations include a base layer of glass composition F and a sealing layer A (without pre-treatment), a pretreatment with sealing layer A only, a base layer of F with a sealing layer of A (with pre-treatment).

TABLE 3 illustrates a variety of slurries comprising phosphate glass compositions and prepared in accordance with various embodiments.

TABLE 3

| Example >> | A | B1 | B2 | C | D | E | F | G |
|---|---|---|---|---|---|---|---|---|
| *h*-Boron nitride powder A | 0 | 0 | 0 | 8.75 | 8.75 | 8.25 | 8.25 | 8.25 |
| *h*-Boron nitride powder B | 0 | 0 | 0 | 0 | 0 | 0.50 | 0.50 | 0.50 |
| Graphene nanoplatelets | 0 | 0 | 0 | 0.15 | 0.15 | 0.15 | 0.15 | 0.15 |
| $H_2O$ | 52.40 | 52.40 | 52.40 | 50.00 | 50.00 | 45.00 | 45.00 | 60.00 |
| Surfynol 465 surfactant | 0 | 0 | 0 | 0.20 | 0.20 | 0.20 | 0.20 | 0.20 |
| Ammonium dihydrogen phosphate (ADHP) $NH_4OH$ | 11.33 | 11.33 | 1.00 | 0 | 0 | 0 | 0 | 0.50 |
| | 0 | 0 | 0 | 0.50 | 0 | 0.50 | 0.50 | 0 |
| Glass frit | 34.00 | 34.00 | 34.00 | 26.50 | 26.50 | 26.50 | 26.50 | 26.50 |
| Acid aluminum phosphate (1:3 Al-P) | 0 | 0 | 0 | 0 | 0 | 10.00 | 0 | 0 |
| Acid aluminum phosphate (1:2.5 Al-P) | 0 | 0 | 10.00 | 0 | 0 | 0 | 0 | 5.00 |
| Acid aluminum phosphate (1:2 Al-P) | 0 | 0 | 0 | 0 | 0 | 0 | 10.00 | 0 |
| Ammonium dihydrogen phosphate (ADHP) | 0 | 0 | 0 | 0 | 0.50 | 0 | 0 | 0 |
| Aluminum orthophosphate (o-$AlPO_4$) | 0 | 2.270 | 2.270 | 0 | 0 | 0 | 0 | 0 |

TABLE 4 illustrates a variety of aluminum phosphate solutions in accordance with various embodiments.

TABLE 4

| Acid aluminum phosphate solutions | | | | | | |
|---|---|---|---|---|---|---|
| | | **AIPO 1:4** | **AIPO 1:3.5** | **AIPO 1:3** | **AIPO 1:2.5** | **AIPO 1:2** |
| **Component** | **MW** | **Amount (grams)** | | | | |
| $H_2O$ | 18.01 | 60.10 | 60.65 | 61.42 | 62.50 | 64.08 |
| $H_3PO_4$ (85%) | 98.00 | 100.00 | 100.00 | 100.00 | 100.00 | 100.00 |
| $Al(OH)_3$ | 78.00 | 19.90 | 22.74 | 26.53 | 31.85 | 39.80 |
| | | **Al:P** | | | | |
| | | 0.250 | 0.286 | 0.333 | 0.400 | 0.500 |

As illustrated in TABLES 3 and 4, oxidation protection system slurries comprising a phosphate glass composition glass frit in a carrier fluid (i.e., water) and various additives including *h*-boron nitride, graphene nanoplatelets, a surfactant, a flow modifier such as, for example, polyvinyl alcohol, polyacrylate or similar polymer, ammonium dihydrogen phosphate, ammonium hydroxide, and acid aluminum phosphates with $Al:H_3PO_4$ ratios of between 1 to 2 and 1 to 3 by weight were prepared. Such as, for example, slurry example G contained *h*-boron nitride and an acid aluminum phosphate solution with an aluminum to phosphorus ratio of 1:2.5. The slurries (examples C, D, E, F and G) were applied to 50 gram carbon-carbon composite structure coupons and cured in inert atmosphere under heat at 899° C (1650° F). After cooling, glazes (examples A, B1 or B2) were applied atop the cured layer and the coupons were fired again in an inert atmosphere. A control coupon was pretreated with an alumina nanoparticle and given an acid aluminum phosphate base layer with a $Al:H_3PO_4$ ratio of about 1 to 3.0, as described in various embodiments, and cured under an inert atmosphere. A control glaze was prepared as a slurry comprising a phosphate glass composition, water, ammonium dihydrogen phosphate, and aluminum orthophosphate. The control glaze (example B1) was applied atop the cured pretreated control and then fired again under an inert atmosphere forming, for example, a base layer. After cooling, the coupons were subjected to isothermal oxidation testing a 760°C (1400°F) over a period of hours while monitoring mass loss.

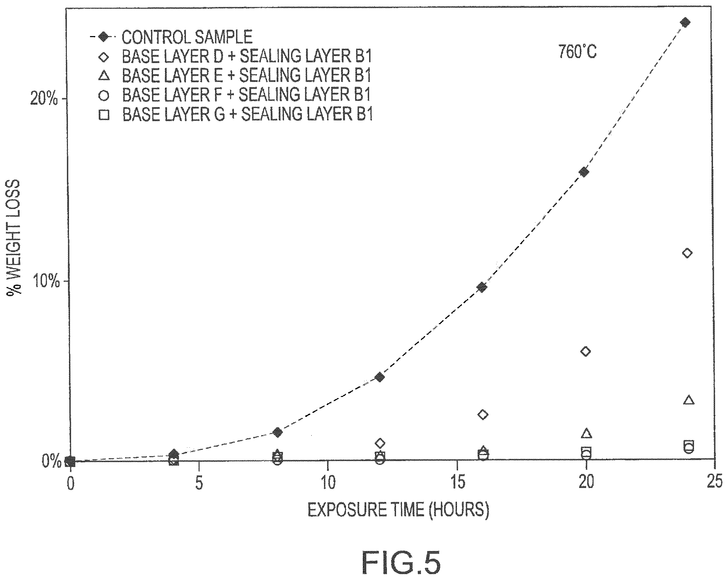

With combined reference to TABLE 3 and FIG. 5, the performance of the coatings applied according to various embodiments is illustrated in comparison with a control. The control includes a pretreated composite structure having only base layer B. Percent weight loss is shown in the y axis and exposure time is shown in the x axis. Against the control, the addition of an acid aluminum phosphate with ratio of $Al:H_3PO_4$ of between 1:2 and 1:3 reduces mass losses due to oxidation by between two times to over ten times (i.e., an order of magnitude). After 24 hours at 760°C (1400°F) the control had lost 24.1% of its mass in comparison the best performing test sample which had lost only 0.7% of its mass. The combined effect of adding acid aluminum phosphate into the slurry wherein the ratio of $Al:H_3PO_4$ is between about 1:2 and 1:3 provides an unexpected increase in protection over standalone pretreatment of the carbon-carbon composite structure followed by application of a base layer or a base layer and sealing layer. Without being bound by theory, it is thought that the addition of acid aluminum phosphate wherein the ratio of $Al:H_3PO_4$ is between about 1:2 and 1:3 produces a base layer which is both cohesive and adhesive.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1.   A method for coating a carbon-carbon composite structure, comprising:

   forming a first slurry (210) by combining a glass frit comprising a first phosphate glass composition with a first carrier fluid comprising an acid aluminum phosphate, wherein a ratio of aluminum to phosphoric acid is between 1:2 and 1:3 by weight;
   applying (220) the first slurry on a surface of the composite structure to form a base layer; and
   heating the composite structure (230) to a temperature sufficient to adhere the base layer to the composite structure, further comprising forming a second slurry by combining a second glass frit comprising a second phosphate glass composition with a second carrier fluid;
   applying (240) the second slurry to the base layer to form a sealing layer; and
   heating the composite structure (250) to a second temperature sufficient to adhere the sealing layer to the base layer;
   wherein the first phosphate glass composition of the base layer comprises between 15 weight percent and 30 weight percent of boron nitride.

2.   The method of claim 1, further comprising applying (215) at least one of a pretreating composition or a barrier coating to the composite structure prior to applying the first slurry to the composite structure, and optionally wherein the barrier coating comprises at least one of a carbide, a nitride, a boron nitride, a silicon carbide, a titanium carbide, a boron carbide, a silicon oxycarbide, a molybdenum disulfide, a tungsten disulfide, or a silicon nitride.

3.   The method of claim 1 or claim 2, further comprising applying a pretreating composition (215), wherein the pretreating composition comprises at least one of a phosphoric acid and an acid phosphate salt, an aluminum salt, and an additional salt, and wherein the composite structure is porous and the pretreating composition penetrates at least one pore of the composite structure.

4.   The method of any preceding claim, further comprising applying a pretreating composition (215), wherein the applying comprises:

   applying, a first pretreating composition to an outer surface of the composite structure, the first pretreating composition comprising aluminum oxide and water,
   heating the pretreating composition;
   applying a second pretreating composition comprising at least one of a phosphoric acid or an acid phosphate salt and an aluminum salt on the first pretreating composition, wherein the composite structure is porous and the second pretreating composition penetrates at least a pore of the composite structure.

5.   The method of any preceding claim, further comprising applying a barrier coating (215) by at least one of reacting the composite structure with molten silicon, spraying, chemical vapor deposition (CVD), molten application, or brushing.

6.   The method of any preceding claim, wherein the first phosphate glass composition is represented by the formula $a(A'_2O)_x(P_2O_5)_{y1}b(G_fO)_{y2}c(A''O)_z$:

   A' is selected from: lithium, sodium, potassium, rubidium, cesium, and mixtures thereof;
   $G_f$ is selected from: boron, silicon, sulfur, germanium, arsenic, antimony, and mixtures thereof;
   A'' is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to 5;
b is a number in the range from 0 to 10;
c is a number in the range from 0 to 30;
x is a number in the range from 0.050 to 0.500;
$y_1$ is a number in the range from 0.100 to 0.950;
$y_2$ is a number in the range from 0 to 0.20; and
z is a number in the range from 0.01 to 0.5;

$$(x + y_1 + y_2 + z) = 1;$$

and

$$x < (y_1 + y_2).$$

7.  The method of any preceding claim, wherein the second phosphate glass composition is represented by the formula $a(A'_2O)_x(P_2O_5)_{y1}b(G_fO)_{y2}c(A''O)_z$:

    A' is selected from: lithium, sodium, potassium, rubidium, cesium, and mixtures thereof;
    $G_f$ is selected from: boron, silicon, sulfur, germanium, arsenic, antimony, and mixtures thereof;
    A'' is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
    a is a number in the range from 1 to 5;
    b is a number in the range from 0 to 10;
    c is a number in the range from 0 to 30;
    x is a number in the range from 0.050 to 0.500;
    $y_1$ is a number in the range from 0.100 to 0.950;
    $y_2$ is a number in the range from 0 to 0.20; and
    z is a number in the range from 0.01 to 0.5;

$$(x + y_1 + y_2 + z) = 1;$$

    and

$$x < (y_1 + y_2).$$

8.  The method of any preceding claim, wherein the first slurry comprises a refractory compound such as a nitride, a boron nitride, a silicon carbide, a titanium carbide, a boron carbide, a silicon oxycarbide, silicon nitride, molybdenum disulfide or tungsten disulfide, and/or wherein the composite structure is a carbon-carbon composite structure.

9.  The method of any preceding claim, wherein at least one of the first carrier fluid or the second carrier fluid comprises water.

10. The method of any preceding claim, wherein the first slurry comprises at least one of a surfactant, a flow modifier, a polymer, ammonium hydroxide, ammonium dihydrogen phosphate, nanoplatelets, or graphene nanoplatelets.

11. The method of any preceding claim, wherein the second slurry comprises at least one of a surfactant, a flow modifier, a polymer, ammonium hydroxide, ammonium dihydrogen phosphate, acid aluminum phosphate, nanoplatelets, or graphene nanoplatelets.

12. An article comprising:

    a carbon-carbon composite structure;

an oxidation protection composition including a base layer disposed on an outer surface of the carbon-carbon composite structure and a sealing layer disposed on an outer surface of the base layer,

> wherein the base layer comprises a first phosphate glass composition having an acid aluminum phosphate,
> wherein a ratio of aluminum to phosphoric acid is between 1:2 and 1:3 by weight,
> wherein the sealing layer comprises a second phosphate glass composition, and
> wherein the first phosphate glass composition of the base layer comprises between 15 weight percent and 30 weight percent of boron nitride.

13. The article of claim 12, wherein the first phosphate glass composition of the base layer comprises *h*-boron nitride and wherein the ratio of aluminum to phosphoric acid is 1:2.5 by weight.

14. The article of claim 12 or claim 13, wherein the first phosphate glass composition is represented by the formula $a(A'_2O)_x(P_2O_5)_{y_1}b(G_fO)_{y_2}c(A"O)_z$:

> A' is selected from: lithium, sodium, potassium, rubidium, cesium, and mixtures thereof;
> $G_f$ is selected from: boron, silicon, sulfur, germanium, arsenic, antimony, and mixtures thereof;
> A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
> a is a number in the range from 1 to 5;
> b is a number in the range from 0 to 10;
> c is a number in the range from 0 to 30;
> x is a number in the range from 0.050 to 0.500;
> $y_1$ is a number in the range from 0.100 to 0.950;
> $y_2$ is a number in the range from 0 to 0.20; and
> z is a number in the range from 0.01 to 0.5;

$$(x + y_1 + y_2 + z) = 1;$$

> and
> $x < (y_1 + y_2)$, and optionally wherein the second phosphate glass composition is represented by the formula $a(A'_2O)_x(P_2O_5)_{y_1}b(G_fO)_{y_2}c(A"O)_z$:

> A' is selected from: lithium, sodium, potassium, rubidium, cesium, and mixtures thereof;
> $G_f$ is selected from: boron, silicon, sulfur, germanium, arsenic, antimony, and mixtures thereof;
> A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
> a is a number in the range from 1 to 5;
> b is a number in the range from 0 to 10;
> c is a number in the range from 0 to 30;
> x is a number in the range from 0.050 to 0.500;
> $y_1$ is a number in the range from 0.100 to 0.950;
> $y_2$ is a number in the range from 0 to 0.20; and
> z is a number in the range from 0.01 to 0.5;

$$(x + y_1 + y_2 + z) = 1;$$

> and

$$x < (y_1 + y_2).$$

**15.** The article of any one of claims 12 to 14, wherein the second phosphate glass composition comprises acid aluminum phosphate and wherein the second phosphate glass composition is substantially free of boron nitride, and/or wherein the carbon-carbon composite structure comprises a pretreatment composition.

**Patentansprüche**

**1.** Verfahren zum Beschichten einer Kohlenstoff-Kohlenstoff-Verbundwerkstoffstruktur, umfassend:

Herstellen einer ersten Schlämme (210) durch Verbinden einer Glasfritte, die eine erste Phosphatglaszusammensetzung umfasst, mit einem ersten Trägerfluid, das ein saures Aluminiumphosphat umfasst, wobei ein Gewichtsverhältnis von Aluminium zu Phosphorsäure zwischen 1:2 und 1:3 liegt;
Aufbringen (220) der ersten Schlämme auf eine Oberfläche der Verbundwerkstoffstruktur, um eine Grundschicht herzustellen; und
Erwärmen der Verbundwerkstoffstruktur (230) auf eine Temperatur, die ausreichend ist, um die Grundschicht an die Verbundwerkstoffstruktur zu binden, ferner umfassend das Herstellen einer zweiten Schlämme durch Verbinden einer zweiten Glasfritte, die eine zweite Phosphatglaszusammensetzung umfasst, mit einem zweiten Trägerfluid;
Aufbringen (240) der zweiten Schlämme auf die Grundschicht, um eine Abdichtschicht herzustellen; und
Erwärmen der Verbundwerkstoffstruktur (250) auf eine zweite Temperatur, die ausreichend ist, um die Abdichtschicht an die Grundschicht zu binden;
wobei die erste Phosphatglaszusammensetzung der Grundschicht zwischen 15 Gewichtsprozent und 30 Gewichtsprozent Bornitrid umfasst.

**2.** Verfahren nach Anspruch 1, ferner umfassend das Aufbringen (215) mindestens eines aus einer Vorbehandlungszusammensetzung oder einer Sperrschicht auf die Verbundwerkstoffstruktur vor dem Aufbringen der ersten Schlämme auf die Verbundwerkstoffstruktur, und optional wobei die Sperrschicht mindestens eines aus einem Carbid, einem Nitrid, einem Bornitrid, einem Siliciumcarbid, einem Titancarbid, einem Borcarbid, einem Siliciumoxycarbid, einem Molybdändisulfid, einem Wolframdisulfid oder einem Siliciumnitrid umfasst.

**3.** Verfahren nach Anspruch 1 oder Anspruch 2, ferner umfassend das Aufbringen einer Vorbehandlungszusammensetzung (215), wobei die Vorbehandlungszusammensetzung mindestens eines aus einer Phosphorsäure und einem sauren Phosphatsalz, einem Aluminiumsalz und einem zusätzlichen Salz umfasst, und wobei die Verbundwerkstoffstruktur porös ist und die Vorbehandlungszusammensetzung mindestens in eine Pore der Verbundwerkstoffstruktur eindringt.

**4.** Verfahren nach einem der vorstehenden Ansprüche, ferner umfassend das Aufbringen einer Vorbehandlungszusammensetzung (215), wobei das Aufbringen Folgendes umfasst:

Aufbringen einer ersten Vorbehandlungszusammensetzung auf eine Außenfläche der Verbundwerkstoffstruktur, wobei die erste Vorbehandlungszusammensetzung Aluminiumoxid und Wasser umfasst,
Erwärmen der Vorbehandlungszusammensetzung;
Aufbringen einer zweiten Vorbehandlungszusammensetzung, die mindestens eines aus einer Phosphorsäure oder einem sauren Phosphatsalz und einem Aluminiumsalz umfasst, auf die erste Vorbehandlungszusammensetzung, wobei die Verbundwerkstoffstruktur porös ist und die zweite Vorbehandlungszusammensetzung mindestens in eine Pore der Verbundwerkstoffstruktur eindringt.

**5.** Verfahren nach einem der vorstehenden Ansprüche, ferner umfassend das Aufbringen einer Sperrschicht (215) durch mindestens eins aus Reagierenlassen der Verbundwerkstoffstruktur mit geschmolzenem Silicium, Sprühen, chemischer Dampfabscheidung (chemical vapor deposition, CVD), Schmelzauftragen oder Bürsten.

**6.** Verfahren nach einem der vorstehenden Ansprüche, wobei die erste Phosphatglaszusammensetzung durch die Formel $a(A'_2O)_x(P_2O_5)_{y1}b(G_fO)_{y2}C(A''O)_z$ dargestellt ist:

A' ist ausgewählt aus: Lithium, Natrium, Kalium, Rubidium, Cäsium und Mischungen daraus;
$G_f$ ist ausgewählt aus: Bor, Silicium, Schwefel, Germanium, Arsen, Antimon und Mischungen daraus;
A'' ist ausgewählt aus: Vanadium, Aluminium, Zinn, Titan, Chrom, Mangan, Eisen, Cobalt, Nickel, Kupfer, Quecksilber, Zink, Thulium, Blei, Zirconium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen daraus;

a ist eine Zahl im Bereich von 1 bis 5;

b ist eine Zahl im Bereich von 0 bis 10;

c ist eine Zahl im Bereich von 0 bis 30;

x ist eine Zahl im Bereich von 0,050 bis 0,500;

$y_1$ ist eine Zahl im Bereich von 0,100 bis 0,950;

$y_2$ ist eine Zahl im Bereich von 0 bis 0,20; und

z ist eine Zahl im Bereich von 0,01 bis 0,5;

$$(x + y_1 + y_2 + z) = 1;$$

und

$$x < (y_1 + y_2).$$

7. Verfahren nach einem der vorstehenden Ansprüche, wobei die zweite Phosphatglaszusammensetzung durch die Formel $a(A'_2O)_x(P_2O_5)_{y_1}b(G_fO)_{y_2}C(A''O)_z$ dargestellt ist:

A' ist ausgewählt aus: Lithium, Natrium, Kalium, Rubidium, Cäsium und Mischungen daraus;

$G_f$ ist ausgewählt aus: Bor, Silicium, Schwefel, Germanium, Arsen, Antimon und Mischungen daraus;

A" ist ausgewählt aus: Vanadium, Aluminium, Zinn, Titan, Chrom, Mangan, Eisen, Cobalt, Nickel, Kupfer, Quecksilber, Zink, Thulium, Blei, Zirconium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen daraus;

a ist eine Zahl im Bereich von 1 bis 5;

b ist eine Zahl im Bereich von 0 bis 10;

c ist eine Zahl im Bereich von 0 bis 30;

x ist eine Zahl im Bereich von 0,050 bis 0,500;

$y_1$ ist eine Zahl im Bereich von 0,100 bis 0,950;

$y_2$ ist eine Zahl im Bereich von 0 bis 0,20; und

z ist eine Zahl im Bereich von 0,01 bis 0,5;

$$(x + y_1 + y_2 + z) = 1;$$

und

$$x < (y_1 + y_2).$$

8. Verfahren nach einem der vorstehenden Ansprüche, wobei die erste Schlämme eine feuerfeste Verbindung umfasst, wie etwa ein Nitrid, ein Bornitrid, ein Siliciumcarbid, ein Titancarbid, ein Borcarbid, ein Siliciumoxycarbid, Siliciumnitrid, Molybdändisulfid oder Wolframdisulfid und/oder wobei die Verbundwerkstoffstruktur eine Kohlenstoff-Kohlenstoff-Verbundwerkstoffstruktur ist.

9. Verfahren nach einem der vorstehenden Ansprüche, wobei mindestens eines aus dem ersten Trägerfluid oder dem zweiten Trägerfluid Wasser umfasst.

10. Verfahren nach einem der vorstehenden Ansprüche, wobei die erste Schlämme mindestens eines aus einem oberflächenaktiven Stoff, einem Fließmodifikator, einem Polymer, Ammoniumhydroxid, Ammoniumdihydrogenphosphat, Nanoplättchen oder Graphen-Nanoplättchen umfasst.

11. Verfahren nach einem der vorstehenden Ansprüche, wobei die zweite Schlämme mindestens eines aus einem oberflächenaktiven Stoff, einem Fließmodifikator, einem Polymer, Ammoniumhydroxid, Ammoniumdihydrogenphosphat, Nanoplättchen oder Graphen-Nanoplättchen umfasst.

**12.** Erzeugnis, umfassend:

eine Kohlenstoff-Kohlenstoff-Verbundwerkstoffstruktur;

eine Oxidationsschutzzusammensetzung, die eine Grundschicht, die auf einer Außenfläche der Kohlenstoff-Kohlenstoff-Verbundwerkstoffstruktur angeordnet ist, und eine Abdichtschicht, die auf einer Außenfläche der Grundschicht angeordnet ist, beinhaltet,

wobei die Grundschicht eine erste Phosphatglaszusammensetzung umfasst, die ein saures Aluminiumphosphat aufweist, wobei ein Gewichtsverhältnis von Aluminium zu Phosphorsäure zwischen 1:2 und 1:3 liegt,

wobei die Abdichtschicht eine zweite Phosphatglaszusammensetzung umfasst und wobei die erste Phosphatglaszusammensetzung der Grundschicht zwischen 15 Gewichtsprozent und 30 Gewichtsprozent Bornitrid umfasst.

**13.** Erzeugnis nach Anspruch 12, wobei die erste Phosphatglaszusammensetzung der Grundschicht h-Bornitrid umfasst und wobei das Gewichtsverhältnis von Aluminium zu Phosphorsäure 1:2,5 beträgt.

**14.** Erzeugnis nach Anspruch 12 oder Anspruch 13, wobei die erste Phosphatglaszusammensetzung durch die Formel $a(A'_2O)_x(P_2O_5)_{y1}b(G_fO)_{y2}c(A''O)_z$ dargestellt ist:

A' ist ausgewählt aus: Lithium, Natrium, Kalium, Rubidium, Cäsium und Mischungen daraus;

$G_f$ ist ausgewählt aus: Bor, Silicium, Schwefel, Germanium, Arsen, Antimon und Mischungen daraus;

A'' ist ausgewählt aus: Vanadium, Aluminium, Zinn, Titan, Chrom, Mangan, Eisen, Cobalt, Nickel, Kupfer, Quecksilber, Zink, Thulium, Blei, Zirconium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen daraus;

a ist eine Zahl im Bereich von 1 bis 5;

b ist eine Zahl im Bereich von 0 bis 10;

c ist eine Zahl im Bereich von 0 bis 30;

x ist eine Zahl im Bereich von 0,050 bis 0,500;

$y_1$ ist eine Zahl im Bereich von 0,100 bis 0,950;

$y_2$ ist eine Zahl im Bereich von 0 bis 0,20; und

z ist eine Zahl im Bereich von 0,01 bis 0,5;

$$(x + y_1 + y_2 + z) = 1;$$

und

$x < (y_1 + y_2)$, und optional wobei die zweite Phosphatglaszusammensetzung durch die Formel $a(A'_2O)_x(P_2O_5)_{y1}b(G_fO)_{y2}C(A''O)_z$ dargestellt ist:

A' ist ausgewählt aus: Lithium, Natrium, Kalium, Rubidium, Cäsium und Mischungen daraus;

$G_f$ ist ausgewählt aus: Bor, Silicium, Schwefel, Germanium, Arsen, Antimon und Mischungen daraus;

A'' ist ausgewählt aus: Vanadium, Aluminium, Zinn, Titan, Chrom, Mangan, Eisen, Cobalt, Nickel, Kupfer, Quecksilber, Zink, Thulium, Blei, Zirconium, Lanthan, Cer, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen daraus;

a ist eine Zahl im Bereich von 1 bis 5;

b ist eine Zahl im Bereich von 0 bis 10;

c ist eine Zahl im Bereich von 0 bis 30;

x ist eine Zahl im Bereich von 0,050 bis 0,500;

y1 ist eine Zahl im Bereich von 0,100 bis 0,950;

y2 ist eine Zahl im Bereich von 0 bis 0,20; und

z ist eine Zahl im Bereich von 0,01 bis 0,5;

$$(x + y_1 + y2 + z) = 1;$$

und

$$x<(y1+y2).$$

**15.** Erzeugnis nach einem der Ansprüche 12 bis 14, wobei die zweite Phosphatglaszusammensetzung saures Aluminiumphosphat umfasst und wobei die zweite Phosphatglaszusammensetzung im Wesentlichen frei von Bornitrid ist und/oder wobei die Kohlenstoff-Kohlenstoff-Verbundwerkstoffstruktur eine Vorbehandlungszusammensetzung umfasst.

**Revendications**

**1.** Procédé de revêtement d'une structure composite carbone-carbone, comprenant :

la formation d'une première suspension (210) en combinant une fritte de verre comprenant une première composition de verre de phosphate avec un premier fluide porteur comprenant un phosphate acide d'aluminium, dans lequel un rapport aluminium-acide phosphorique est compris entre 1:2 et 1:3 en poids ;
l'application (220) de la première suspension sur une surface de la structure composite pour former une couche de base ; et
le chauffage de la structure composite (230) à une température suffisante pour faire adhérer la couche de base à la structure composite, comprenant en outre la formation d'une seconde suspension en combinant une seconde fritte de verre comprenant une seconde composition de verre de phosphate avec un second fluide porteur ;
l'application (240) de la seconde suspension sur la couche de base pour former une couche d'étanchéité ; et
le chauffage de la structure composite (250) à une seconde température suffisante pour faire adhérer la couche d'étanchéité à la couche de base ;
dans lequel la première composition de verre de phosphate de la couche de base comprend entre 15 pour cent en poids et 30 pour cent en poids de nitrure de bore.

**2.** Procédé selon la revendication 1, comprenant en outre l'application (215) d'au moins l'un parmi une composition de prétraitement ou un revêtement barrière sur la structure composite avant l'application de la première suspension sur la structure composite et, éventuellement, dans lequel le revêtement barrière comprend au moins l'un parmi un carbure, un nitrure, un nitrure de bore, un carbure de silicium, un carbure de titane, un carbure de bore, un oxycarbure de silicium, un disulfure de molybdène, un disulfure de tungstène ou un nitrure de silicium.

**3.** Procédé selon la revendication 1 ou la revendication 2, comprenant en outre l'application d'une composition de prétraitement (215), dans lequel la composition de prétraitement comprend au moins l'un parmi un acide phosphorique et un sel de phosphate acide, un sel d'aluminium et un sel supplémentaire, et dans lequel la structure composite est poreuse et la composition de prétraitement pénètre dans au moins un pore de la structure composite.

**4.** Procédé selon une quelconque revendication précédente, comprenant en outre l'application d'une composition de prétraitement (215), dans lequel l'application comprend :

l'application d'une première composition de prétraitement sur une surface extérieure de la structure composite, la première composition de prétraitement comprenant de l'oxyde d'aluminium et de l'eau,
le chauffage de la composition de prétraitement ;
l'application d'une seconde composition de prétraitement comprenant au moins l'un parmi un acide phosphorique ou un sel de phosphate acide et un sel d'aluminium sur la première composition de prétraitement, dans lequel la structure composite est poreuse et la seconde composition de prétraitement pénètre dans au moins un pore de la structure composite.

**5.** Procédé selon une quelconque revendication précédente, comprenant en outre l'application d'un revêtement barrière (215) par au moins une action parmi la mise en réaction de la structure composite avec du silicium fondu, la pulvérisation, le dépôt chimique en phase vapeur (CVD), l'application fondue ou le brossage.

**6.** Procédé selon une quelconque revendication précédente, dans lequel la première composition de verre de phosphate est représentée par la formule $a(A'_2O)_x(P_2O_5)_{y1}b(G_fO)_{y2}c(A''O)_z$ :

A' est choisi parmi : le lithium, le sodium, le potassium, le rubidium, le césium et leurs mélanges ;
$G_f$ est choisi parmi : le bore, le silicium, le soufre, le germanium, l'arsenic, l'antimoine et leurs mélanges ;

A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;
a est un nombre compris entre 1 et 5 ;
b est un nombre compris entre 0 et 10 ;
c est un nombre compris entre 0 et 30 ;
x est un nombre compris entre 0,050 et 0,500 ;
$y_1$ est un nombre compris entre 0,100 et 0,950 ;
$y_2$ est un nombre compris entre 0 et 0,20 ; et
z est un nombre compris entre 0,01 et 0,5 ;

$$(x + y_1 + y_2 + z) = 1 ;$$

et

$$x < (y_1 + y_2).$$

**7.** Procédé selon une quelconque revendication précédente, dans lequel la seconde composition de verre de phosphate est représentée par la formule a $(A'_2O)_x(P_2O_5)_{y1}b(G_fO)_{y2}c(A''O)_z$ :

A' est choisi parmi : le lithium, le sodium, le potassium, le rubidium, le césium et leurs mélanges ;
$G_f$ est choisi parmi : le bore, le silicium, le soufre, le germanium, l'arsenic, l'antimoine et leurs mélanges ;
A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;
a est un nombre compris entre 1 et 5 ;
b est un nombre compris entre 0 et 10 ;
c est un nombre compris entre 0 et 30 ;
x est un nombre compris entre 0,050 et 0,500 ;
$y_1$ est un nombre compris entre 0,100 et 0,950 ;
$y_2$ est un nombre compris entre 0 et 0,20 ; et
z est un nombre compris entre 0,01 et 0,5 ;

$$(x + y_1 + y_2 + z) = 1 ;$$

et

$$x < (y_1 + y_2).$$

**8.** Procédé selon une quelconque revendication précédente, dans lequel la première suspension comprend un composé réfractaire tel qu'un nitrure, un nitrure de bore, un carbure de silicium, un carbure de titane, un carbure de bore, un oxycarbure de silicium, un nitrure de silicium, un disulfure de molybdène ou un disulfure de tungstène, et/ou dans lequel la structure composite est une structure composite carbone-carbone.

**9.** Procédé selon une quelconque revendication précédente, dans lequel au moins l'un parmi le premier fluide porteur et le second fluide porteur comprend de l'eau.

**10.** Procédé selon une quelconque revendication précédente, dans lequel la première suspension comprend au moins l'un parmi un tensioactif, un modificateur de flux, un polymère, de l'hydroxyde d'ammonium, du dihydrogénophosphate d'ammonium, des nanoplaquettes ou des nanoplaquettes de graphène.

**11.** Procédé selon une quelconque revendication précédente, dans lequel la seconde suspension comprend au moins l'un parmi un tensioactif, un modificateur de flux, un polymère, de l'hydroxyde d'ammonium, du dihydrogénophosphate d'ammonium, du phosphate acide d'aluminium, des nanoplaquettes ou des nanoplaquettes de graphène.

**12.** Article comprenant :

une structure composite carbone-carbone ;
une composition de protection contre l'oxydation comprenant une couche de base disposée sur une surface extérieure de la structure composite carbone-carbone et une couche d'étanchéité disposée sur une surface extérieure de la couche de base,
dans lequel la couche de base comprend une première composition de verre de phosphate ayant un phosphate acide d'aluminium, dans lequel un rapport aluminium-acide phosphorique est compris entre 1:2 et 1:3 en poids, dans lequel la couche d'étanchéité comprend une seconde composition de verre de phosphate, et dans lequel la première composition de verre de phosphate de la couche de base comprend entre 15 pour cent en poids et 30 pour cent en poids de nitrure de bore.

**13.** Article selon la revendication 12, dans lequel la première composition de verre de phosphate de la couche de base comprend du nitrure de bore h et dans lequel le rapport aluminium-acide phosphorique est de 1:2,5 en poids.

**14.** Article selon la revendication 12 ou la revendication 13, dans lequel la première composition de verre de phosphate est représentée par la formule a $(A'_2O)_x(P_2O_5)_{y1}b(G_fO)_{y2}c(A"O)_z$ :

A' est choisi parmi : le lithium, le sodium, le potassium, le rubidium, le césium et leurs mélanges ;
$G_f$ est choisi parmi : le bore, le silicium, le soufre, le germanium, l'arsenic, l'antimoine et leurs mélanges ;
A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;
a est un nombre compris entre 1 et 5 ;
b est un nombre compris entre 0 et 10 ;
c est un nombre compris entre 0 et 30 ;
x est un nombre compris entre 0,050 et 0,500 ;
$y_1$ est un nombre compris entre 0,100 et 0,950 ;
$y_2$ est un nombre compris entre 0 et 0,20 ; et
z est un nombre compris entre 0,01 et 0,5 ;

$$(x + y_1 + y_2 + z) = 1 \; ;$$

et
$x < (y_1 + y_2)$, et éventuellement dans lequel la seconde composition de verre de phosphate est représentée par la formule a $(A'_2O)_x(P_2O_5)_{y1}b(G_fO)_{y2}C(A"O)_z$ :

A' est choisi parmi : le lithium, le sodium, le potassium, le rubidium, le césium et leurs mélanges ;
$G_f$ est choisi parmi : le bore, le silicium, le soufre, le germanium, l'arsenic, l'antimoine et leurs mélanges ;
A" est choisi parmi : le vanadium, l'aluminium, l'étain, le titane, le chrome, le manganèse, le fer, le cobalt, le nickel, le cuivre, le mercure, le zinc, le thulium, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et leurs mélanges ;
a est un nombre compris entre 1 et 5 ;
b est un nombre compris entre 0 et 10 ;
c est un nombre compris entre 0 et 30 ;
x est un nombre compris entre 0,050 et 0,500 ;
$y_1$ est un nombre compris entre 0,100 et 0,950 ;
$y_2$ est un nombre compris entre 0 et 0,20 ; et
z est un nombre compris entre 0,01 et 0,5 ;

$$(x + y_1 + y_2 + z) = 1 \; ;$$

et

$$x < (y_1 + y_2).$$

**15.** Article selon l'une quelconque des revendications 12 à 14, dans lequel la seconde composition de verre de phosphate comprend du phosphate acide d'aluminium et dans lequel la seconde composition de verre de phosphate est sensiblement exempte de nitrure de bore, et/ou dans lequel la structure composite carbone-carbone comprend une composition de prétraitement.

FIG.1A

FIG.1B

200

FORM A FIRST SLURRY — 210

APPLY THE FIRST SLURRY TO A COMPOSITE STRUCTURE — 220

HEAT THE COMPOSITE STRUCTURE TO FORM A BASE LAYER OF PHOSPHATE GLASS — 230

FIG.2A

300

```
┌─────────────────────────────┐
│     FORM A FIRST SLURRY      │ ─── 210
└─────────────────────────────┘
              │
              ▼
┌─────────────────────────────┐
│   APPLY AT LEAST ONE OF A    │
│   PRETREATING COMPOSITION    │ ─── 215
│    OR A BARRIER COATING      │
└─────────────────────────────┘
              │
              ▼
┌─────────────────────────────┐
│   APPLY THE FIRST SLURRY TO  │
│    A COMPOSITE STRUCTURE     │ ─── 220
└─────────────────────────────┘
              │
              ▼
┌─────────────────────────────┐
│     HEAT THE COMPOSITE       │
│  STRUCTURE TO FORM A BASE    │ ─── 230
│    LAYER OF PHOSPHATE        │
│         GLASS                │
└─────────────────────────────┘
```

# FIG.2B

400

APPLY AT LEAST ONE OF A
PRETREATING COMPOSITION
OR A BARRIER COATING — 215

FORM A FIRST SLURRY — 210

APPLY THE FIRST SLURRY TO
A COMPOSITE STRUCTURE — 220

HEAT THE COMPOSITE
STRUCTURE TO FORM A BASE
LAYER OF PHOSPHATE
GLASS — 230

FORM A SECOND SLURRY
AND APPLY TO THE BASE
LAYER — 240

HEAT THE COMPOSITE
STRUCTURE TO FORM A
SEALING LAYER OVER THE
BASE LAYER — 250

FIG.2C

FIG.3

FIG.4

FIG.5

EP 3 222 602 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006036551 A

- EP 2767529 A2